# EUROPEAN PATENT APPLICATION

(11) **EP 1 265 230 A2**
(43) Date of publication of application: **11.12.2002**
(21) Application number: 02012235.4
(22) Date of filing: 03.06.2002
(51) Int. Cl.: G11B 7/005, G11B 7/09, G11B 19/28

(54) **Optical disc drive**

(30) Priority: 04.06.2001 JP 2001168289
(71) Applicant: Mitsumi Electric Co., Ltd., Chofu-shi, Tokyo (JP)
(72) Inventor: Hirabayashi, Shinji, c/o Mitsumi Electric Co.,Ltd., Atsugi-shi, Kanagawa (JP)
(74) Representative: Solf, Alexander, Dr.

(57) **Abstract**

First and second signals that are obtained by receiving the reflected light from an optical disc are normalised by normalixers 64 and 65, respectively. The maximum voltage level of the normalized first and second signals are respectively held by peak hold circuits 66 and 67, and the signal of the voltage level corresponding to the difference between both signals is output by a differential circuit 68. Then, based on this signal, the first and second signals are corrected by a corrective circuit 71. The first and second signals are thereby normalized so that the amplitude components of these signals become a constant amount. The signal of the voltage level of the difference between the normalized first and second signals is output by a differential circuit 69, and the frequency component corresponding to the WOBBLE signal is extracted by a band-pass filter.

## Description

### BACKGROUND OF THE INVENTION

### Field of the Invention

The present invention relates to an optical disc drive.

### Description of the Prior Art

Known optical disc drives for recording data onto and reading out data from a recordable optical disc include, for example CD-R, CD-RW and the like.

Further, known optical disc drives often comprise a rotational driving mechanism for rotating a loaded optical disc and an optical head (hereinafter, referred to as "optical pick-up"). The optical pick-up is movable in a radial direction with respect to the loaded optical disc. The optical pick-up may emit a laser beam to record and read out information (data) to and from the optical disc. Additionally, the optical disc drive may comprise a sled motor for moving the optical pick-up in the radial direction.

The optical pick-up comprises an optical head body (optical pick-up base) which is provided with a laser diode and a split photodiode. The optical pick-up also has an objective lens which is supported on the optical head body by means of suspension springs to enable movement of the objective lens in the optical axis direction (rotational axis direction) as well as the radial direction with respect to the optical disc. Further, the optical pick-up has a focusing actuator for moving the objective lens in the optical axis direction, and a tracking actuator for the objective lens in the radial direction.

In known optical disc drives, the optical pick-up is moved to a target track (target address), and at the target track, data is recorded (written) onto the optical disc and/or reproduced (read out) from the optical disc while focus control operations and tracking control operations are carried out.

In known optical discs, a spiral pre-groove (WOBBLE) is also formed along a track. The pre-groove is recorded with Absolute Time In Pre-groove (ATIP) information, which is time information. The spiral pre-groove often meanders with a predetermined period (22.05 kHz for the reference speed).

The pre-groove functions as a guide groove when data is recorded onto the optical disc. The information recorded by the pre-groove, is utilized for controlling the rotation speed of the optical disc when data is recorded and reproduced. The pre-groove also specifies the recording position (absolute time) on the optical disc.

The main beam from the optical pick-up and the sub-beams from left and right sides of the optical pick up are irradiated on the optical disc in, for example, a DPP (Differential Push Pull) method. The information recorded in the pre-groove is extracted based on the reflected light from the optical disc of the main laser beam.

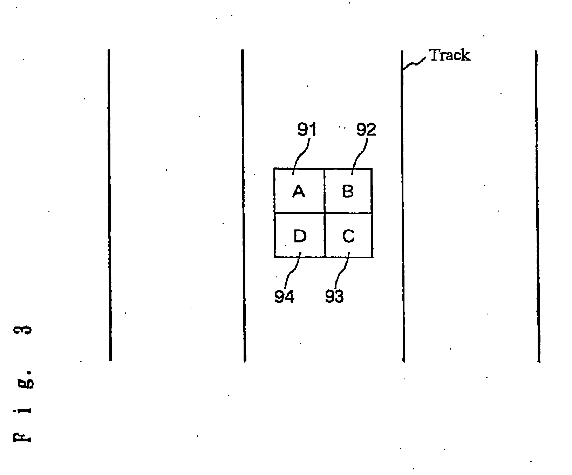

The reflected light of the main laser beam is received by means of four regions as shown in Fig. 3, namely, four light-receiving sections 91, 92, 93 and 94 in the split photodiode with respect to the direction of the pre-groove (direction of a track) of the optical disc. Four signals A, B, C and D, each of which has a voltage level that corresponds to a quantity of reflected light received by the four light-receiving sections 91, 92, 93 and 94 respectively, are generated and output.

The light-receiving sections 91 and 94 are placed on one side of the optical disc in the radial direction. The location is optically equivalent to the inside of the optical disc. The light-receiving sections 91 and 94 constitute an inside light-receiving section. Therefore, the light-receiving sections 91 and 94 receive the reflected light from the inside region of a given track on the optical disc.

On the other hand, the light-receiving sections 92 and 93 are placed on the other side of the optical disc in the radial direction. The location is optically equivalent to the outside of the optical disc. The light-receiving sections 92 and 93 constitute an outside light-receiving section. Therefore, the light-receiving sections 92 and 93 receive the reflected light from the outside region of a given track on the optical disc.

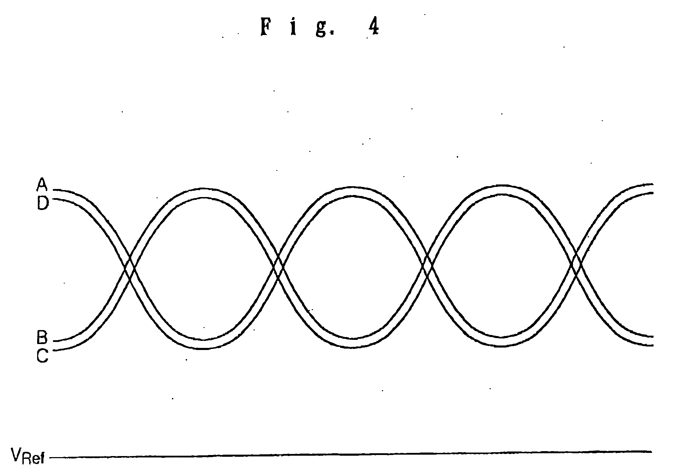

As shown in Fig. 4, signals A and D are reverse signals of the signals B and C (inverting phase signals). Each signal of the signals A, B, C and D has a given voltage against the reference voltage V_{Ref}. The DC (Direct Current) components and frequency components of these signals A, B, C and D are changed according to the quantity of the reflected light that is received. Both the DC component and the frequency component are enlarged if the quantity of light is large. On the other hand, they are diminished if the quantity is small.

The WOBBLE signal mentioned above and the like may be extracted by means of a WOBBLE signal detecting circuit based on signals A, B, C and D.

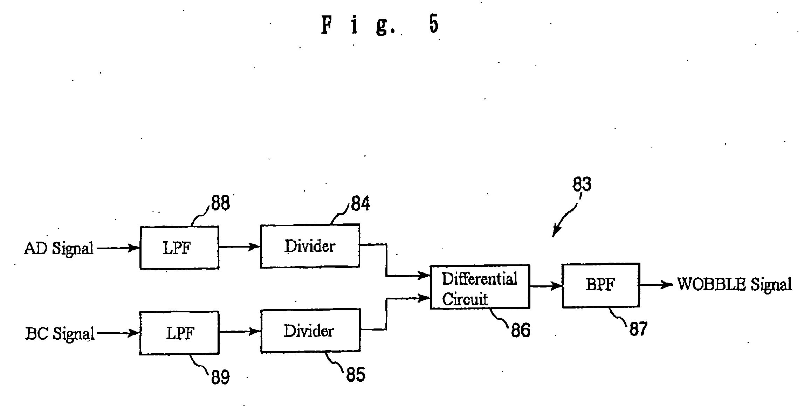

Fig. 5 is a block diagram that shows a circuit configuration of the WOBBLE signal detecting circuit according to the conventional optical disc drive.

In the WOBBLE signal detecting circuit 83, an AD signal, the signal obtained by adding the above-mentioned signals A and D, is input to a divider 84 that is a normalizer via a LPF (Low-Pass Filter) 88. A BC signal, the signal obtained by adding above-mentioned signals B and C, is input to a divider 85 that is a normalizer via a LPF (Low-Pass Filter) 89.

In the divider 84, the AD signal is normalised based on the DC component and frequency component of the AD signal. In the divider 85, the BC signal is normalized based on the DC component and frequency component of the BC signal.

The output signals of divider 84 and divider 85 are extracted via a BPF (Band-Pass Filter) 87. More specifically, the normalized AD signal and the normalized BC signal are subtracted by means of a differential circuit 86, and the signal component of the WOBBLE signal (22.05 kHz for the reference speed) is extracted via a BPF (Band-Pass Filter) 87.

Now, if an objective lens is shifted to the radial direction of an optical disc by means of a tracking actuator when recording and/or reading out information (data) to and/or from the optical disc, then an output balance between the AD signal that is the added signal of the inside light-receiving section and the BC signal that is an added signal of the outside light-receiving section, is lost.

At this point, since the AD signal and the BC signal are normalized by means of the dividers 84 and 85 in the conventional WOBBLE signal detecting circuit 83 mentioned above, the output balance between the two signals can be kept at some level. However, a problem may arise which it is difficult to extract the WOBBLE signal as a result of the output balance not being completely kept.
This problem can be solved by improving the shift characteristic of the WOBBLE signal. The shift characteristic means that the WOBBLE signal fluctuates when the objective lens of the optical pick-up is shifted as a result of the output unbalance between AD signal and BC signal.

### SUMMARY OF THE INVENTION

It is therefore an object of the present invention to provide an optical disc drive in which the shift characteristic of a WOBBLE signal can be stabilized when an objective lens of an optical pick-up is shifted.

In an embodiment of the present invention, an optical disc drive that can improve the shift characteristic of the WOBBLE signal is provided. The optical disc drive comprises: a rotational drive mechanism for rotating an optical disc wherein the optical disc is loaded on the optical disc drive; an optical pick-up having a light source for emitting laser light and a plurality of light-receiving sections arranged at one side and the other side along the radial direction of the optical disc. The optical disc drive further has a WOBBLE signal detecting circuit for generating a WOBBLE signal from a pre-groove formed on the optical disc via said optical pick-up, wherein the WOBBLE signal detecting circuit has a first normalizer for normalizing a first signal obtained by receiving the reflected light from the optical disc with at least one light-receiving section positioned at one side in the plurality of light-receiving sections when the laser light is emitted to the optical disc from said optical pick-up; a second normalizer for normalizing a second signal obtained by receiving the reflected light from the optical disc with at least one light-receiving section positioned at the other side in the plurality of light-receiving sections when the laser light is emitted to the optical disc from said optical pick-up; and a correcting means for correcting the first signal and/or the second signal based on the output signals of said first normalizer and said second normalizer. Finally, the WOBBLE signal detecting circuit is constructed to generate the WOBBLE signal based on the first signal normalized by said first normalizer and the second signal normalized by said second normalizer.

According to the optical disc drive of the present invention, the first signal and/or the second signal may be corrected based on the output signal from the first normalizer and/or the output signal from the second normalizer in the WOBBLE signal detecting circuit. Further, the balance between the amplitude components of the first signal and the second signal can be kept almost completely, thereby the both signals can be normalized in a more exact manner.

In this way, the shift characteristic of the WOBBLE signal may be improved. Further, the fine shift characteristic of the WOBBLE signal may be obtained even if the objective lens of the optical pick-up is shifted, for example.

Preferably, the correcting means may be constructed to correct the first signal and/or second signal so that the maximum voltage level of the output signal from the first normalizer becomes equal to that of the output signal from the second normalizer. For example, the correcting means may be constructed so as to correct the output amplitude level based on the DC component of the first signal and/or the second signal.

In another embodiment of the present invention, one side of the plurality of light-receiving sections includes two light-receiving sections. Additionally, another side of the plurality of light-receiving sections includes two light-receiving sections. It is preferred that the first signal is generated by adding two signals that are obtained from two light-receiving sections of the one side in the plurality of light-receiving sections, and that the second signal is generated by adding two signals that are obtained from two light-receiving sections of the other side in the plurality of light-receiving sections.

Further, it is also preferred that the light-receiving sections of the one side are optically equivalent to the inside of the optical disc, and the light-receiving sections of the other side are optically equivalent to the outside of the optical disc.

In another embodiment of the present invention, an optical disc drive may improve the shift characteristic of the WOBBLE signal. The optical disc drive comprises: a rotational drive mechanism for rotating the optical disc loaded on the optical disc drive; and an optical pick-up having a light source for emitting laser light and a plurality of light-receiving sections arranged at one side and the other side along the radial direction of the optical disc; and a WOBBLE signal detecting circuit for generating a WOBBLE signal from a pro-groove formed on the optical disc via said optical pick-up. The WOBBLE signal detecting circuit includes: a first normalizer for normalizing a first signal obtained by receiving the reflected light from the optical disc with at least one light-receiving section positioned at one side in the plurality of light-receiving sections when the laser light is emitted to the optical disc from said optical pick-up; a second normalizer for normalizing a second signal obtained by receiving the reflected light from the optical disc with at least one light-receiving section positioned at the other side in the plurality of light-receiving sections when the laser light is emitted to the optical disc from said optical pick-up; a first peak hold circuit for holding the maximum voltage level of the output signal from said first normalizer; a second peak hold circuit for holding the maximum voltage level of the output signal from said second normalizer; a first differential circuit for outputting the signal of the voltage level in response to the difference between that of the output signal from said first peak hold circuit and that of the output signal from said second peak hold circuit; a corrective circuit for correcting the first signal and/or the second signal based on the output signal of said first differential circuit; a second differential circuit for outputting the signal of the voltage level in response to the difference between that of the first signal normalized by said first normalizer and that of the second signal normalized by said second normalizer; and a extracting circuit for extracting the frequency component corresponding to the WOBBLE signal from the output signal from said second differential circuit.

In an embodiment of the present invention, the extracting circuit consists of a band-pass filter.
In another embodiment, the corrective circuit may correct the output amplitude level based on the DC component of the first signal and/or the DC component of the second signal.

In another embodiment of the present invention, one side of the plurality of light-receiving sections has two light-receiving sections, and another side of the plurality of light-receiving sections has two light-receiving sections. The first signal may be generated by adding two signals that may be obtained from two light-receiving sections of the one side in the plurality of light-receiving sections. In addition, the second signal may be generated by adding two signals that may be obtained from two light-receiving sections of the other side in the plurality of light-receiving sections.

Further, the light-receiving sections of the one side may be optically equivalent to the inside of the optical disc, and the light-receiving sections of the other side may be optically equivalent to the outside of the optical disc.

In another embodiment of the present invention, a method is provided for generating a WOBBLE signal output from an analog signal processor in an optical disc drive. The method comprises the steps of: emitting laser light to an optical disc by means of an optical pick-up; generating a first signal by receiving the reflected light from the optical disc with at least one light-receiving section positioned at one side in a plurality of light-receiving sections; generating a second signal by receiving the reflected light from the optical disc with at least one light-receiving section positioned at the other side in the plurality of light-receiving sections; normalizing the first and second signals; and correcting the first signal and/or the second signal based on the normalized first and second signals.

The correcting step may correct the first signal and/or second signal so that the maximum voltage level of the first signal normalized equals the second signal normalized. The correcting step may also correct the output amplitude level of the WOBBLE signal based on the DC component of the first signal and/or that of the second signal.

### BRIEF DESCRIPTION OF THE DRAWEINGS

Fig. 1 is a block diagram illustrating a circuit configuration (principal part) of an embodiment of an optical disc drive according to the present invention.

Fig. 2 is a circuit diagram illustrating an embodiment of a configuration of a WOBBLE signal detecting circuit in the optical disc drive shown in Fig. 1.

Fig. 3 is a schematic drawing illustrating a positional relationship between a track of the optical disc and each of four light-receiving sections of a main laser beam of the optical pick-up.

Fig. 4 is a schematic drawing illustrating signals A, D and B, C, and reference voltage V_{ref}.

Fig. 5 is a block diagram illustrating a circuit configuration of the WOBBLE signal detecting circuit according to conventional optical disc drive.

### DETAILED DESCRIPTION OF THE PREFERRED EMBODIMENTS

In the following, an optical disc drive according to the present invention will be described in detail based on the preferred embodiments that are shown in the accompanying drawings.

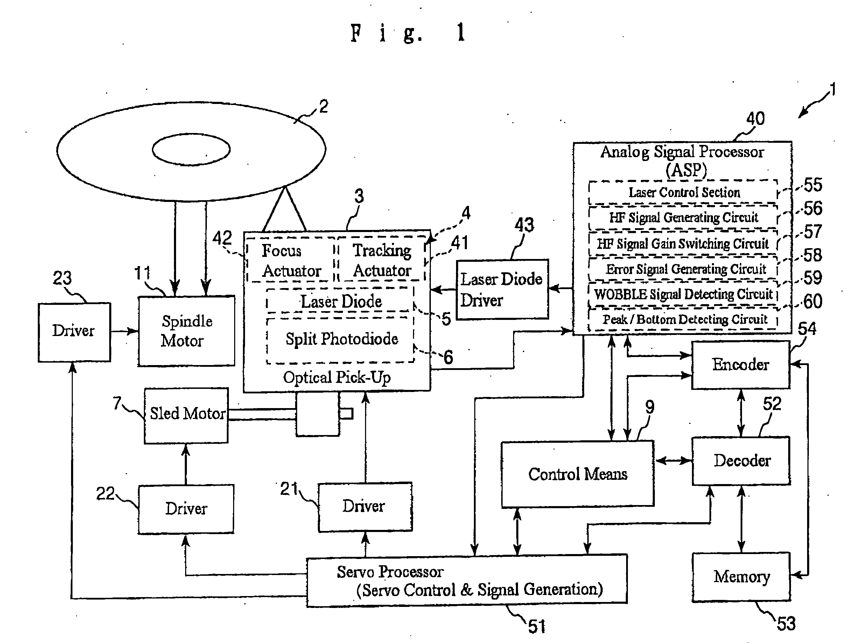

Fig. 1 is a block diagram illustrating a circuit configuration (principal part) of an embodiment of an optical disc drive according to the present invention.
The optical disc drive 1 as shown in Fig. 1 may record and/or reproduce data (information) to and/or from an optical disc 2 (for example, CD-R, CD-RW).
A spiral pre-groove (WOBBLE) (not shown) is formed along a track in the optical disc 2.

The spiral pre-groove may be recorded with Absolute Time In Pre-groove (ATIP) information (that is time information), and meanders for a predetermined period (22.05 kHz for the reference speed) in a radial direction of the optical disc 2. More specifically, the ATIP information may be biphase modulated and/or frequency-modulated at a carrier frequency of 22.05 kHz to be recorded.

The pre-groove may function as a guide groove to form pits and/or lands (recording pits and lands) for optical disc 2.
Further, information recorded by the pre-groove may be utilized for controlling the rotation speed of the optical disc 2. Additionally, the information recorded may be used to specify a recording position (absolute time) on the optical disc 2 by being reproduced. Namely, the WOBBLE signal obtained from the pre-groove may be utilized for controlling the rotation speed of the optical disc 2 when data is recorded and reproduced. The WOBBLE signal may further specify the recording position on the optical disc 2.

The optical disc drive 1 has a rotation driving mechanism for rotating a turntable while the optical disc is loaded thereon. The rotation driving mechanism has a spindle motor 11 for rotating the turntable, a driver 23 for driving the spindle motor 11, and the turntable (not shown) equipped on the optical disc 2.

Further, the optical disc drive 1 has an optical pick-up (optical head) 3 capable of movement along a radial direction of the optical disc 2 (a radial direction of the turntable against the optical disc 2, which is loaded on the turntable. Also, the optical disc drive 1 has an optical pick-up moving mechanism for moving the optical pick-up 3 in the radial direction. Further, the optical disc drive 1 has a control means 9, an analog signal processor (ASP) 40, a laser diode driver 43, a servo processor (DSP) 51, and/or a decoder 52. Still further, the optical disc drive 1 may have a memory 53 (e.g. RAM (Random Access Memory)) and/or encoder 54. Hereinafter, the radial direction of the optical disc 2 will be referred to simply as "the radial direction."

The analog signal processor 40 may control the power of laser light used while recording and/or reproducing data to and/or from the optical disc 2. The analog signal processor 40 may also perform signal-processing corresponding to the analog signal such as the processing of the analog signal that is read out from the optical disc 2. As shown in Fig. 1, the processor 40 comprises a laser control section 55 for controlling the power of laser light, an HF signal generating circuit 56 for generating a HF signal from the current (or voltage) output corresponding to the laser light, an HF signal gain switching circuit 57 for amplifying the HF signal, an error signal generating circuit 58 for generating various types of errors, a WOBBLE signal detecting circuit 59 for detecting the WOBBLE signal output from the optical pick-up 3, and a peak/bottom detecting circuit 60 for extracting the amplitude (envelope) of various types of input signals.

In addition, the configuration of the analog signal processor 40 may not be limited to above configuration. The processor 40 may be equipped with a part of or all functions that are described herein, or may be equipped with a variety of types of functions other than the functions that are described herein.

The optical pick-up moving mechanism has a sled motor 7, a driver 22 for driving the sled motor 7, and power transmission mechanism (not shown). The rotation of the sled motor 7 may be decelerated and transmitted, and the rotational movement may be converted to the linear movement of the optical pick-up 3.

The optical pick-up 3 further comprises an optical head body (optical pick-up base) (not shown) that may be equipped with a laser diode 5 (light source) for outputting the laser light and a split photodiode 6 (light-receiving means), and an objective lens (condenser) (not shown).

The laser diode 5 may be driven by means of a laser diode driver 43. The drive of the laser diode driver 43 may be controlled by means of a laser control section 55 in the analog signal processor 40.

The split photodiode 6 may have a plurality of light-receiving section for receiving the reflected light from the optical disc 2. In Fig. 3, four light-receiving section 91, 92, 93 and 94 are shown which receive the reflected light of a main laser beam. (The light-receiving sections for receiving the reflected light of sub laser beams are not shown in this figure.) In this figure, the positions of the light-receiving sections 91, 92, 93 and 94 are not actual positions, but are positions on the optical disc 2.

The light-receiving sections 91 and 94 may be placed on one side (left side in Fig. 3) of the optical disc 2. More specifically, the location is inside and optically equivalent on the optical disc 2. The light-receiving sections 91 and 94 constitute an inside light-receiving section.
Therefore, the light-receiving sections 91 and 94 receive the reflected light of the main laser beam from the inside region of a given track (target track) on the optical disc 2. Next, two signals A and D, which may have voltage levels corresponding to the quantity of the reflected light received by the light-receiving sections 91 and 94, respectively, are generated and output.

On the other hand, the light-receiving sections 92 and 93 may be placed on the other side (right side in Fig. 3) of the optical disc 2. More specifically, the location is outside and optically equivalent on the optical disc 2, and the light-receiving sections 92 and 93 constitute an outside light-receiving section.
Therefore, the light-receiving sections 92 and 93 receive the reflected light of the main laser beam from the outside region of a given track (target track) on the optical disc 2. Next, two signals B and C which may have voltage levels corresponding to the quantity of the reflected light received by the light-receiving sections 92 and 93, respectively, are generated and output.

The objective lens may be supported by suspension springs (biasing means) provided on the optical head body (not shown). In addition, the objective lens may be moved, with respect to the optical head body, more specifically, along the radial direction and the optical axis of the objective lens (i.e., the rotational axis direction of the optical disc 2 (turntable)). Hereinafter, the optical axis direction of the objective lens will be referred to as "the optical axis direction," and the rotational axis direction of the optical disc 2 will be referred to as "the rotational axis direction."

The objective lens may be placed on the reference position (central position) of the objective lens that may be predefined in the optical head body, i.e., a neutral position. Hereinafter, the reference position of the objective lens will be referred to as "the reference position."
The objective lens may be shifted from the reference position. The objective lens may be biased to the reference position by the restoring force of the suspension springs.

Further, the optical pick-up 3 has an actuator 4 for moving the objective lens with respect to the optical head body. The actuator 4 comprises a tracking actuator 41 for moving the objective lens in the radial direction with respect to the optical head body, and a focus actuator 42 for moving the objective lens in the optical axis direction (rotational axis direction).
The actuator 4, i.e., the tracking actuator 41 and the focus actuator 42 may be driven by the driver 21 independently.

The control means 9 controls the optical disc drive 1. Additionally, the control means 9 may control the optical pick-up 3 (including the actuator 4, the laser diode 5, and so on), the sled motor 7, spindle motor 11, and the analog signal processor 40. Further, the control means 9 may control a servo processor 51, a decoder 52, a memory 53, an encoder 54, and the like.

The optical disc drive 1 may communicate and may be removably connected to a computer via an interface control section.

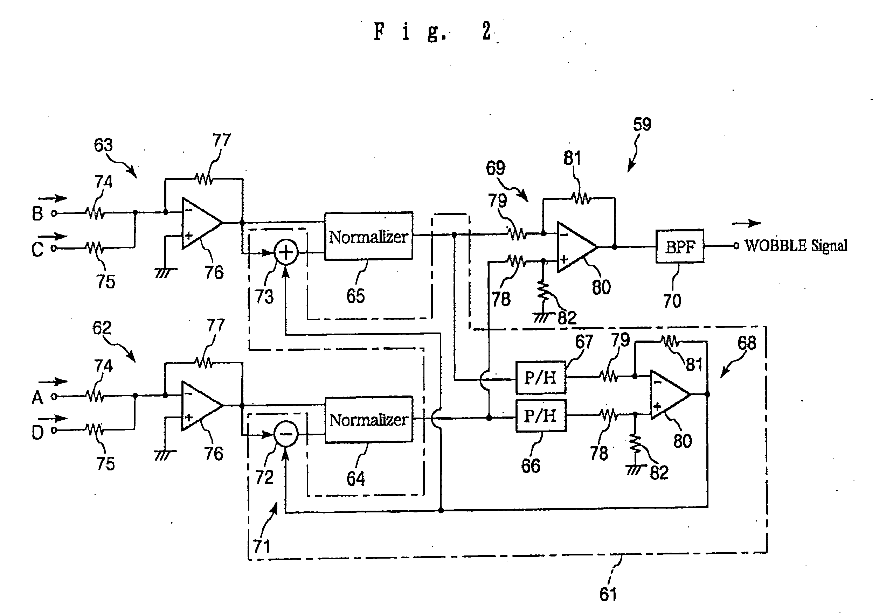

Next, the WOBBLE signal detecting circuit 59 will be described.
Referring now to Fig. 2, a circuit diagram illustrates a configuration of the WOBBLE signal detecting circuit 59 in the optical disc drive 1.

The WOBBLE signal detecting circuit 59 is a circuit (means) for generating the WOBBLE signal from the spiral pre-groove that meanders at a predetermined period. The spiral pre-groove may be formed along the track of the optical disc 2 via the optical pick-up 3. The WOBBLE signal detecting circuit 59 comprises a first adding and inverting circuit 62, a second adding and inverting circuit 63, a first normalizer 64, a second normalizer 65, a second differential circuit 69, a band-pass filter (sampling circuit) 70, and compensating means 61.

The compensating means 61 comprises a compensating circuit 71, which may consist of a first peak hold circuit (P/H) 66, a second peak hold circuit (P/H) 67, a first differential circuit 68, a subtracter 72, and adder 73.

In addition, the present invention has two signals A and D corresponding to the inside region of the track, and two signals B and C corresponding to the outside region of the track are obtained by means of the optical pick-up 3. However, the present invention is not intended to be limited to such configuration. For example, the number of the signals corresponding to the inside and outside regions may be one, three or more.

Hereinafter, the WOBBLE signal detecting circuit 59 shown in Fig. 2 will be described in detail.
Referring now to Fig. 2, the adding and inverting circuit 62 has resistance elements 74 and 75 that may provide responses to signals A and D. The adding and inverting circuit 62 may also have an amplifier 76 and a resistance element for feedback 77.

The non-inverting input terminal (+) of the amplifier 76 is connected to the ground terminal, and the inverting input terminal (-) is connected to the input terminals of the signals A and D in common via the resistance elements 74 and 75. Further, the output terminal of the amplifier 76 is connected to the inverting input terminal (-) via the resistance element for feedback 77.

In the adding and inverting circuit 62, the signals A and D may be added via the resistance elements 74 and 75, respectively. The signals A and D may then be inverted and amplified by means of the amplifier 76 and output to the normalizer 64. The gain of the adding and inverting circuit 62 may not be limited. For example, the gain of the adding and inverting circuit 62 may be one time.

The adding and inverting circuit 63 has resistance elements 74 and 75 that may provide responses to the signals B and C. The adding and inverting circuit 63 may also have an amplifier 76 and a resistance element for feedback77.

The non-inverting input terminal (+) of the amplifier 76 is connected to the ground terminal, and the inverting input terminal (-) is connected to the input terminals of the signals A and D in common via the resistance elements 74 and 75. Further, the output terminal of the amplifier 76 is connected to the inverting input terminal (-) via the resistance element for feedback77.

In the adding and inverting circuit 63, the signals B and C may be added via the resistance elements 74 and 75, respectively. The signals B and C may then be inverted and amplified by means of the amplifier 76, and output to the normalizer 64. The gain of the adding and inverting circuit 63 may not be limited. For example, the gain of the adding and inverting circuit 63 may be one time.

As shown in Fig. 4, the signals A and D may be inverted (inverting phase signals) to the signals B and C. The signals B and C have given voltages with respect to the reference voltage V_{ref}. Therefore, the signals AB and BC may be the inverted signals (inverting phase signals) that have given voltages with respect to the reference voltage V_{ref}.

An output signal of adding and inverting circuit 62 (a first signal), i.e., the AD signal that is output from the adding and inverting circuit 62 is input directly to the normalizer 64, and indirectly to the normalizer 64 via the subtracter 72. An output signal of adding and inverting circuit 63 (a second signal), i.e., the BC signal that is output from the adding and inverting circuit 63 is input directly to the normalizer 65, and indirectly to the normalizer 65 via the adder 73.

The normalizer 64 is a circuit for normalizing the AD signal that is input from the adding and inverting circuit 62, in which the AD signal may be inverted and amplified.
In the normalizer 64, the signal input from the adding and inverting circuit 62 may be used as the amplitude component of the AD signal, and the signal input via the subtracter 72 may be used as the DC (Direct Current) component of the AD signal. The amplitude component of the AD signal may be divided by its DC component. A given coefficient may then be integrated. As a result, the AD signal input from the adding and inverting circuit 62 (i.e., the amplitude component and DC component of the AD signal) becomes normalized.

The normalizer 65 is a circuit for normalizing the BC signal input from the adding and inverting circuit 63, in which the BC signal is inverted and amplified.
In the normalizer 65, the signal input from the adding and inverting circuit 63 may be used as the amplitude component of the BC signal, and the signal input via the adder 73 may be used as the DC component of the BC signal. The amplitude component of the BC signal may be divided by its DC component. A given coefficient may then be integrated. As a result, the BC signal input from the adding and inverting circuit 63 (i.e., the component and DC component of the BC signal) becomes normalized.

The component and DC component of the AD signal may become nearly equal to the BC signal by the normalizer 64 and the normalizer 65.

The output signal of the normalizer 64 (the AD signal normalized) is input to the differential circuit 68 via the peak hold circuit 66, and is input to the differential circuit 69. The output signal of the normalizer 65 (the BC signal normalized) is input to the differential circuit 68 via the peak hold circuit 67, and is input to the differential circuit 69.

The peak hold circuit 66 is a circuit for holding the maximum voltage level of the output signal of the normalizer 64. More specifically, the output signal of the normalizer 64 may be the normalized AD signal (AD signal after normalization). The peak hold circuit 67 is a circuit for holding the maximum voltage level of the output signal of the normalizer 64, i.e., the BC signal normalized.

The differential circuit 68 comprises resistance elements 78 and 79 that may provide responses to the output signals of the peak hold circuits 66 and 67. The differential circuit 68 may also comprise an amplifier 80, a resistance element for feedback 81, and a resistance element for ground 82.

The non-inverting input terminal (+) of the amplifier 80 may be connected to the output side of the peak hold circuit 66 corresponding to the AD signal via the resistance element 78. The non-inverting input terminal may also be connected to the ground terminal via the resistance element for ground 82. The inverting input terminal (-) may be connected to the output side of the peak hold circuit 67 corresponding to the BC signal via the resistance element 79. The output terminal of the amplifier 80 may be connected to the inverting input terminal (-) via the resistance element for feedback 81.

The signal of the voltage level in response to the difference between that of the output signal from the peak hold circuit 66 and that of the output signal from the peak hold circuit 67, i.e., the signal of the voltage level in response to the difference between the maximum voltage level of a normalized AD signal and that of a normalized BC signal is output from the differential circuit 68. In an embodiment of the present invention, the maximum voltage level of the normalized BC signal may be subtracted from that of the normalized AD signal, and the resulting voltage level may be amplified and output. The gain of the differential circuit 68 may not be limited. For example, the gain of the differential circuit 68 may be one time.

The output from the differential circuit 68 may be input to the subtracter 72 and adder 73 in the corrective circuit 71 (correcting means).
The corrective circuit 71 may be a circuit for correcting the AD signal and the BC signal based on the output signal from the differential circuit 68, i.e., the signal of the voltage level of the difference between the maximum voltage level of the AD signal normalized and that of the BC signal normalized.

If the output signal of the differential circuit 68 is positive, i.e., the maximum voltage level of the AD signal normalized is greater than that of the BC signal normalized, then the voltage level of the output signal from the differential circuit 68 is subtracted from the DC component of the AD signal by means of the subtracter 72. Additionally, the voltage level of output signal from the differential circuit 68 may be added to the DC component of the BC signal by means of the adder 73. Therefore, the AD signal may be normalized so that the amplitude component may be diminished by the normalizer 64. The BC signal may be normalized so that the amplitude component may be enlarged by the normalizer 65.

On the other hand, if the output signal of the differential circuit 68 is negative, i.e., the maximum voltage level of the AD signal normalized is smaller than that of the BC signal normalized, then the absolute value of the voltage level may be added to the DC component of the AD signal by subtracting the voltage level of the output signal from the differential circuit 68 from the DC component of the AD signal by means of the subtracter 72. The absolute value of the voltage level may be subtracted from the DC component of the BC signal by adding the voltage level of output signal from the differential circuit 68 to the DC component of the BC signal by means of the adder 73. Therefore, the AD signal may be normalized so that the amplitude component may be enlarged by the normalizer 64, and the BC signal may be normalized so that the amplitude component may be diminished by the normalizer 65.

The AD signal and BC signal may be corrected in the WOBBLE signal detecting circuit 59 by using, for example, the DC components of them so that the maximum voltage level of the normalized AD signal becomes equal to the normalized BC signal. This may be based on the difference between the maximum voltage level of the normalized AD signal and the normalized BC signal. Next, a balance between the amplitude component of the AD signal and the BC signal may be kept almost completely. Additionally, both signals may be normalized in a more exact manner (precisely).

The shift characteristic of the WOBBLE signal may be improved, and the fine shift characteristic of the WOBBLE signal may be obtained regardless of whether the objective lens of the optical pick-up 3 is shifted.

In another embodiment of the present invention, the subtracter 72 may be used as a circuit for correcting the AD signal, and the adder 73 may be used as a circuit for correcting the BC signal. More specifically, the output signals from the peak hold circuits 66 and 67 corresponding to the AD signal and BC signal may be input to the non-inverting input terminal (+) and inverting input terminal (-) in the differential circuit 68, respectively. Therefore, if the configuration is inversed (the output signals of the peak hold circuits 67 and 66 corresponding to the BC signal and AD signal are input to the non-inverting input terminal (+) and inverting input terminal (-) in the differential circuit 68), the configuration in which the connecting positions of the subtracter 72 and adder 73 are switched may be taken. More specifically, the adder 73 and the subtracter 72 may be used as circuits for correcting the AD signal and the BC signal, respectively.

Further, one of the subtracter 72 and adder 73 may be omitted.
Moreover, the present invention may be constructed so that the DC components of the AD signal and BC signal may be corrected in the corrective circuit 71. However, the present invention may not be limited to this construction. The AD signal and the BC signal may be corrected in a way so that the amplitude component of the AD signal normalized by normalizers 64 and 65 may be equal to that of the BC signal normalized.

The differential circuit 69 comprises resistance elements 78 and 79 that are provided in response to the output signals of the peak hold circuits 66 and 67. The differential circuit 69 may also have an amplifier 80, a resistance element for feedback 81, and a resistance element for ground 82.

The non-inverting input terminal (+) of the amplifier 80 is connected to the output side of normalizer 64 corresponding to the AD signal via the resistance element 78. In addition, the non-inverting input terminal (+) is connected to the ground terminal via the resistance element for ground 82. The inverting input terminal (-) is connected to the output side of the normalizer 65 corresponding to the BC signal via the resistance element 79. The output terminal of the amplifier 80 is connected to the inverting input terminal (-) via the resistance element for feedback 81.

The signal of the voltage level in response to the difference between the voltage level of the output signal from the peak hold circuit 66 and that of the output signal from the peak hold circuit 67 is output from the differential circuit 69. For example, the voltage level of the BC signal normalized may be subtracted from that of the AD signal normalized, and the resulting voltage level may be amplified and output to the BPF 70. The gain of the differential circuit 69 may not be limited. For example, the gain of the differential circuit 69 may be one time.

Because the AD signal and BC signal are inverted signals (inverting phase signals), the amplitude component of the output signal from the differential circuit 69 may become twice as large as that of the AD signal normalized or that of the BC signal normalized if the gain of the differential circuit 69 is one time, for example.

The band-pass filter 70 is a circuit for extracting the frequency component (22.05 kHz for the reference speed) that corresponds to the WOBBLE signal from the output signal of the differential circuit 69. The frequency component is output from the band-pass filter 70 as the WOBBLE signal.

Next, the operation of the WOBBLE signal detecting circuit 59 mentioned above will be described briefly.

In the WOBBLE signal detecting circuit 59, the AD signal obtained by adding the signals A and D is inverted and output by the adding and inverting circuit 62. Also, the BC signal obtained by adding the signals B and C is inverted and output by the adding and inverting circuit 63.

The output signals from the adding and inverting circuits 62 and 63 are input to the normalizers 64 and 65, respectively. The output signals may be normalized by the normalizers 64 and 65 so that the amplitude component of the AD signal is almost equal to the BC signal.

The output signals from the normalizers 64 and 65 are input to the peak hold circuits 66 and 67, respectively. The maximum voltage levels of the normalized AD and BC signals are held by the peak hold circuits 66 and 67, and the voltage level of the difference between both signals is output by the differential circuit 68.

The output signal from the differential circuit 68 is input to the corrective circuit 71. Then, the DC components of the AD signal and BC signal are corrected based on the voltage of the difference between the maximum voltage level of the AD signal normalized and the BC signal normalized. Therefore, the balance between the amplitude component of the AD signal and the BC signal can be always kept almost completely. Further, both signals can be normalized more efficiently.

Next, the voltage level of the BC signal normalized is subtracted from the voltage level of the AD signal normalized by means of the differential circuit 69. The frequency component corresponding to the WOBBLE signal is extracted by means of the band-pass filter 70 and output from the band-pass filter 70.

The AD signal and the BC signal are inverted by the adding and inverting circuits 62 and 63 in the WOBBLE signal detecting circuit 59. Additionally, the signals are output from the WOBBLE signal detecting circuit 59. However, it is not intended to limit the invention to this configuration, for example, the WOBBLE signal detecting circuit 59 may be configured so as to output these signals without inverting them.

Next, the operation of the optical disc drive 1 will be described.
The optical disc drive 1 moves the optical pick-up 3 to the target track (target address). Additionally, the optical disc drive 1 may carry out writing (recording) information (data) to the optical disc 2, reading out information (data) from the optical disc 2, along with focus control, tracking control, sled control and/or rotation number control (rotational speed control).

While data is recorded to the optical disc 2, the pre-groove that is formed on the optical disc 2 is reproduced (read out). Additionally, the data is recorded to the optical disc 2 along the pre-groove.

While the data (information) to record to the optical disc 2 is input to the optical disc drive 1 via an interface control section (not shown), the data is input to the encoder 54.

In the encoder 54, the data may be encoded, and modulated (EFM modulation) in the modulation matter called EFM (Eight to Fourteen Modulation) to form ENCODE EFM signal.

The ENCODE EFM signal may be a signal formed from pulses. More specifically, each pulse may have a predetermined length (period) of any one of 3T - 11T.

The laser control section 55 may switch the level of the WRITE POWER signal input from the control means 9 between a high level (H) and a low level (L). Additionally, the laser control section 55 outputs the signal, thereby controlling the operations of the laser diode 5 of the optical pick-up 3.

The laser control section 55 outputs the high-level (H) WRITE POWER signal while the ENCODE EFM signal is in a high level (H). For example, the laser output level may be stepped up (to become a level for writing in data). The laser control section 55 outputs the low-level (L) WRITE POWER signal while the ENCODE EFM signal is in a low level (L). For example, the laser output level may be stepped down (to return to a level for reading out data).

Thus, when the level of the ENCODE EFM signal is high (H), a pit having a given length is formed (written) in the optical disc 2, and when the level of the EVCODE EFM signal is low (L), a land having a given length is formed (written) in the optical disc 2.
In this way, data may be written (recorded) to a given track of the optical disc 2.

Data may also be sequentially recorded from the inner side of the optical disc 2 toward its outer side along the pre-groove.

Further, when data is written to the optical disc 2, the laser light having the laser output for reading out is emitted to the pre-groove of the optical disc 2 from the laser diode 5 in the optical pick-up 3, and the reflected light from the optical disc 2 is received by the split photodiode 6 in the optical pick-up 3.

The above-mentioned signals A, B, C and D are output from the split photodiode 6. Signals A, B, C and D include a 22.05 kHz frequency signal at the reference speed, and a signal by biphase modulating the ATIP information and further frequency-modulating it at a carrier frequency of 22.05 kHz.

Signals A, B, C and D are input to the WOBBLE signal detecting circuit 59 (where the signals are digitized). The digitized WOBBLE signal is then input to the control means 9.

The control means 9 demodulates the frequency-modulated ATIP information in the WOBBLE signal to obtain a BIDATA signal (biphase signal). The BIDATA signal may be a pulse signal having a length of any one of 1T-3T. In addition, above-mentioned ATIP information may be obtained by biphase demodulating and decoding of the BIDATA signal.

When data (information) is reproduced (read out) from the optical disc 2, the laser output level may be kept at the output level for reading out by means of the laser control section 55. The output level for reading out (the output level of the main beam) may be set equal to or less than 0.7 mW.

When data is read out from the optical disc 2, the laser light at the output for reading out is emitted to a given track on the optical disc 2 from the laser diode 5 in the optical pick-up 3. The reflected light from the optical disc 2 is received by means of the split photodiode 6 in the optical pick-up 3.

Each of currents (voltages) corresponding to the quantity of received light is output from each light receiving section of the split photodiode 6, respectively. Namely, each signal (detected signal) is input to the HF signal generating circuit 56 and error signal generating circuit 58.

In the HF signal generating circuit 56, an HF (RF) signal is generated by carrying out, for example, addition and/or subtraction to the detected signals.

This HF signal may be an analog signal corresponding to pits and/or lands formed in the optical disc 2.

The HF signal is input to the HF signal gain switching circuit 57 and then may be amplified. The gain of the HF signal gain switching circuit 57 may be switched by means of the gain-switching signal from the control means 9.

The amplified HF signal (hereinafter, referred to as the "HF signal") is input to the peak/bottom detecting circuit 60 and the servo processor 51.

Further, in the peak/bottom detecting circuit 60, the amplitude (envelope) of an input signal, such as the HF signal, the tracking error (TE) signal (described later) and the like is extracted.

The top and bottom of the extracted amplitude are referred to as the "PEAK (TOP)" and "BOTTOM," respectively. The signal corresponding to the tops of the amplitudes is referred to as "PEAK (TOP) signal," and the signal corresponding to the bottoms of the amplitudes is referred to as "BOTTOM signal."

The PEAK signal and BOTTOM signal is input to the A/D converter (not shown) housed in the control means 9. Signals in the A/D converter may be converted into digital signals.

The PEAK and BOTTOM signals may be utilized, for example, to measure the amplitude, to adjust the amplitude of the tracking error signal, and to determine the presence or absence of the HF signal.

In the servo processor 51, the HF signal is digitized, and also EFM demodulated (Eight to Fourteen Modulation). As a result, an EFM signal may be obtained. The EFM signal is a signal formed by, for example, a pulse having a length (period) that corresponds to any one of 3T-11T.
The EFM signal is converted into a predetermined form of data (DATA signal) in the servo processor 51, and then input to the decoder 52.

Next, the data is decoded to a predetermined form of data for communication (transmission), and transmitted to a computer via the interface control section.

The tracking control, sled control, focus control, and rotation number control (rotational speed control) in the record/reproduce operation, which are mentioned above, may be carried out as follows.

The voltage signal, into which the current signal from the split photodiode 6 in the optical pick-up 3 is converted, is input to the analog signal processor 40.

The error signal generating circuit 58 generates the tracking error (TE) signal (voltage signal) based on the current-voltage converted signal from the split photodiode 6.

The tracking error signal is a signal representing the amount of displacement of the objective lens in the radial direction from the center of the track (i.e., the amount of the displacement of the radial direction of the objective lens from the center of the track) and the direction thereof.

The tracking error signal is input to the servo processor 51. In the servo processor 51, the tracking error signal may undergo predetermined signal processing, such as, for example inversion of phase, and/or amplification. Therefore, the tracking servo signal (voltage signal) is generated. A given drive voltage is applied to the tracking actuator 41 via the driver 21 as a result of the tracking servo signal. The objective lens moves toward the center of the track by driving the tracking actuator 41. Namely, the tracking servo is engaged.

A limit exists to follow the objective lens to the track with the drive of the tracking actuator 41. Therefore, to cover the tracking, the objective lens may be controlled so as to be returned to the reference position (carry out the sled control) by moving the optical head body toward the direction equal to the mobile direction of the objective lens by the drive of the sled motor 7 via the driver 22.

The error signal generating circuit 58 generates the focus error (FE) signal (voltage signal) based on the current-voltage converted signal from the split photodiode 6.

The focus error signal is a signal that represents the amount of the displacement of the objective lens in the optical axis direction (rotational axis direction) from the focus position (i.e., the amount of the displacement of the optical axis direction (rotatianal axis direction) of the objective lens from the focus position).

The focus error signal is input to the servo processor 51. In the servo processor 51, the predetermined signal processing, such as, for example, the inversion of phase, amplification, etc., may be carried out to the focus error signal. As a result, a focus servo signal (voltage signal) is generated. The given driving voltage is applied to the focus actuator 42 via the driver 21 based on the focus servo signal. The objective lens moves toward the focus position by driving the focus actuator 42. Namely, the focus servo is engaged.

Further, in the servo processor 51, the control signal (voltage signal) to control the rotational number (rotation speed) of the spindle motor 11, i.e., the control signal to set to a target value the rotational number of the spindle motor 11, is generated and input to the driver 23.

The driving signal (voltage signal) to drive the spindle motor 11 based on the control signal is generated in the driver 23.

The driving signal output from the driver 23 is input to the spindle motor 11. The spindle motor 11 is then driven based on the driving signal. Further, the spindle servo is engaged so that the rotational number of the spindle motor 11 becomes the target value.

As described above, it should be noted that even though the optical disc drive of the present invention was described with reference to the embodiment shown in the drawings, the present invention is not limited to such structure, and it is possible to replace various elements described above with any elements capable of performing the same or similar functions,

For example, the optical disc drive of the present invention is not limited to the device capable of recording and/or reproducing data to and/or from an optical disc. The present invention can be applied to reproduce (read) only optical disc drives such as CD-ROM, or DVD-ROM, and record only optical disc drives.
The optical disc drive of the present invention may also be applied to other various optical disc drives for recording and/or reproducing to and/or from various types of optical disc.

## Claims

1. An optical disc drive for recording and/or reproducing data to and from an optical disc via an optical pick-up, the optical disc drive comprising:
a rotational drive mechanism for rotating the optical disc loaded on the optical disc drive;
the optical pick-up having a light source for emitting laser light and a plurality of light-receiving sections arranged at one side and another side along a radial direction of the optical disc; and
a WOBBLE signal detecting circuit for generating a WOBBLE signal from a pre-groove formed on the optical disc via said optical pick-up, the WOBBLE signal detecting circuit including:
a first normalizer for normalizing a first signal obtained by receiving the reflected light from the optical disc with at least one light-receiving section positioned at one side in the plurality of light-receiving sections when the laser light is emitted to the optical disc from said optical pick-up;
a second normalizer for normalizing a second signal obtained by receiving the reflected light from the optical disc with at least one light-receiving section positioned at the other side in the plurality of light-receiving sections when the laser light is emitted to the optical disc from said optical pick-up; and
a correcting means for correcting the first signal and/or the second signal based on the output signals of said first normalizer and said second normalizer;
wherein said WOBBLE signal detecting circuit is constructed so as to generate the WOBBLE signal based on the first signal normalized by said first normalizer and the second signal normalized by said second normalizer.

2. The optical disc drive according to Claim 1, wherein said correcting means is constructed so as to correct the first signal and/or second signal so that the maximum voltage level of the output signal from the first normalizer becomes equal to that of the output signal from the second normalizer.

3. The optical disc drive according to Claim 1, wherein said correcting means corrects the output amplitude level based on the DC component of the first signal and/or that of the second signal.

4. The optical disc drive according to Claim 1, wherein the one side of the plurality of light-receiving sections includes two light-receiving sections and the other side of the plurality of light-receiving sections includes two light-receiving sections, wherein the first signal is generated by adding two signals obtained from the two light-receiving sections of the one side in the plurality of light-receiving sections, and the second signal is generated by adding two signals obtained from the two light-receiving sections of the other side in the plurality of light-receiving sections.

5. The optical disc drive according to Claim 1, wherein the light-receiving sections of the one side are optically equivalent to the inside of the optical disc, and the light-receiving sections of the other side are optically equivalent to the outside of the optical disc.

6. An optical disc drive for recording and/or reproducing data to and from an optical disc via an optical pick-up, the optical disc drive comprising:
a rotational drive mechanism for rotating the optical disc loaded on the optical disc drive;
the optical pick-up having a light source for emitting laser light and a plurality of light-receiving sections arranged at one side and another side along the radial direction of the optical disc; and
a WOBBLE signal detecting circuit for generating a WOBBLE signal from a pre-groove formed on the optical disc via said optical pick-up, the WOBBLE signal detecting circuit including;
a first normalizer for normalizing a first signal obtained by receiving the reflected light from the optical disc with at least one light-receiving section positioned at one side in the plurality of light-receiving sections when the laser light is emitted to the optical disc from said optical pick-up;
a second normalizer for normalizing a second signal obtained by receiving the reflected light from the optical disc with at least one light-receiving section positioned at the other side in the plurality of light-receiving sections when the laser light is emitted to the optical disc from said optical pick-up;
a first peak hold circuit for holding the maximum voltage level of the output signal from said first normalizer;
a second peak hold circuit for holding the maximum voltage level of the output signal from said second normalizer;
a first differential circuit for outputting the signal of the voltage level in response to the difference between that of the output signal from said first peak hold circuit and that of the output signal from said second peak hold circuit;
a corrective circuit for correcting the first signal and/or the second signal based on the output signal of said first differential circuit;
a second differential circuit for outputting the signal of the voltage level in response to the difference between that of the first signal normalized by said first normalizer and that of the second signal normalized by said second normalizer; and
an extracting circuit for extracting the frequency component corresponding to the WOBBLE signal from the output signal from said second differential circuit.

7. The optical disc drive according to Claim 6, wherein said extracting circuit has a band-pass filter.

8. The optical disc drive according to Claim 6, wherein said corrective circuit corrects the output amplitude level based on the DC component of the first signal and/or the DC component of the second signal.

9. The optical disc drive according to Claim 6, wherein the one side of the plurality of light-receiving sections includes two light-receiving sections and the other side of the plurality of light-receiving sections includes two light-receiving sections, wherein the first signal is generated by adding two signals obtained from two light-receiving sections of the one side in the plurality of light-receiving sections, and the second signal is generated by adding two signals obtained from two light-receiving sections of the other side in the plurality of light-receiving sections.

10. The optical disc drive according to Claim 6, wherein the light-receiving sections of the one side are optically equivalent to the inside of the optical disc, and the light-receiving sections of the other side are optically equivalent to the outside of the optical disc.

11. A method of generating a WOBBLE signal output from an analog signal processor in an optical disc drive, the method comprising the steps of
emitting laser light to an optical disc by means of an optical pick-up;
generating a first signal by receiving the reflected light from the optical disc with at least one light-receiving section positioned at one side in a plurality of light-receiving sections;
generating a second signal by receiving the reflected light from the optical disc with at least one light-receiving section positioned at the other side in the plurality of light-receiving sections;
normalizing the first and second signals; and
correcting the first signal and/or the second signal based on normalization of the first signal and the second signal.

12. The method according to Claim 11, wherein the correcting step includes correcting the first signal and/or the second signal so that the maximum voltage level of the normalized first signal becomes equal to that of the normalized second signal.

13. The method according to Claim 11, wherein the correcting step includes correcting the output amplitude level of the WOBBLE signal based on the DC component of the first signal and/or that of the second signal.
